# EUROPEAN PATENT APPLICATION

(11) **EP 1 545 129 A1**
(43) Date of publication of application: **22.06.2005**
(21) Application number: 03257884.1
(22) Date of filing: 16.12.2003
(51) Int. Cl.: H04N 7/14, H04N 7/15, H04N 7/24

(54) **Push to watch : a video person-to-person streaming application**

(71) Applicant: Hutchison Whampoa Three G IP (Bahamas) Limited, Nassau, New Providence (BS)
(72) Inventor: de Fina, Silvia, 00128 - Roma (IT)
(74) Representative: Butcher, Ian James

(57) **Abstract**

Video communication is enabled between users in a mobile communications network on a uni-directional basis enabling video 'chat' to occur between users. Preferably the system provides presence information between users enabling simple selection of users with whom to communicate.

## Description

The present invention relates to the field of video communication in general and more particularly to a method and apparatus for 'instant' or 'near-real-time' video communication.

Mobile telecommunications in general, and third generation mobile telephones in particular, have developed the ideas of providing video communication between users of the mobile communications network. In particular it is known to provide full-duplex video calls between users in a third generation mobile telephone system, and indeed in other systems.

Two disadvantages of such a full-duplex video communication have been identified: low bandwidth efficiency and the lack of control a user has over the service "invasiveness", typical of video communication. The first of these disadvantages is of technical nature, whereas the second one is related to the user experience.

As for low bandwidth efficiency, this derives from the fact that, when the call is initiated, the network allocates a 'circuit' channel for it, that is one in which the full bandwidth is allocated to the channel for the full duration of the call. The bandwidth of the channel is fixed so that it must be dimensioned according to the maximum bit rate provided by the used audio/video codec. This is inefficient as the actual bit rate, turns out to be strongly variable in time, so that there are periods during a call when not all of the allocated bandwidth is being used.

As for the lack of control a user has over the service "invasiveness", this derives from the fact that a video communication lasts for the whole duration of the session, regardless the users' potential willingness within the session itself to switch from video to only audio and back again. Besides that, a source of reduced flexibility is the full-duplex video communication concept itself in the way it forces both users to have to agree and accept to share their own video images; a less invasive communication concept is the one allowing a receiver to hide their own side while receiving video from a sender intently willing to offer their one.

The present invention proposes a method and apparatus to create a new service family in which the above drawbacks are solved. As such, it optimises bandwidth allocation as well as allows the user to control/reduce the intrinsic 'invasiveness' of the video communication.

This method and apparatus enables audio/video 'chat' between users. In particular, once a session is established between users, one of the users sends streaming audio/video to the (or to each) other user. It is only possible for one user at a time to be sending audio/video during the existence of the session.

The streaming is sent by means of a "packet" channel, instead of a "circuit" channel. As such, no fixed bandwidth is allocated to the call: the occupied bandwidth changes during time, according to the actual instant bit rate provided by the audio/video codec. Only the required capacity is allocated to the call, thereby achieving a more efficient overall usage of the available network resources.

Besides that, a further clear advantage in terms of restricting the amount of data, is due to the fact that only one party is allowed to transmit at a time, due to the half-duplex connection scheme. Further, the spot nature of the actual users' willingness to share videos within a session just as part of it rather than for its wholeness, incidentally turn also out to positively contribute to fix the aforementioned bandwidth efficiency drawback of present video communication, as reducing the overall amount of data to be exchanged.

It is the case therefore that a true 'real-time' channel is not established between the users who are communicating, but a near real-time user experience can be achieved, with the user equipment effectively functioning as 'walkie-talkie' type devices where one party can speak to the other(s) at a time.

In a particularly preferred arrangement, a user can establish a video streaming session by activating a control on their handset or other equipment, and this feature is referred to as "Push to Watch", here and in the following indicated as PTW.

This feature may be combined with the known idea of the Presence list, which, in this context, is a list indicating which other users are active and ready to participate in a PTW session. As such, the Presence information can be efficiently used to control the video "invasiveness". The desired user for communication can be selected from the list and a session activated simply.

This feature is conveniently achieved when the invention is implemented using the Session Initiation Protocol (SIP), as end-to-end signalling protocol, also embedding a number of useful capabilities, such as Instant Messaging and a solution for the aforementioned Presence list.

The invention is preferably implemented on an IP-based network, such that the user equipment may be any client on an IP network.

Also the invention may be utilised in circumstances other than Person-to-Person, such as to receive streaming video from a camera or data server.

Further, the invention may be implemented in a one-to-many arrangement, in which a multi-user chat-type session is established, and which utilises a server which receives the streaming video and handles the distribution to all of the users.

The invention will be better understood from the following description of preferred embodiments which is given by way of example only with reference to the accompanying drawings, in which:
Fig. 1 shows an example of a PTW interface in a preferred embodiment, with preview, and
Fig. 2 shows an example of the floor control notification in the preferred embodiment.

In summary, in the invention, video communication is enabled between users in a mobile communications network on a uni-directional basis enabling video 'chat' to occur between users. Preferably the system provides presence information between users enabling simple selection of users with which to communicate.

In the preferred embodiment, PTW enables real-time video and audio communication between PTW service subscribers. A user pushes a button and the audio and/or video information as captured in real time by the wireless device is sent to the other user, in streaming mode.

There are two main applications for the PTW:
1. PTW application with Presence
2. PTW feature during a Voice Call

The first one can be subdivided in two different applications, according to the data flow:
1.1. PTW: Person-To-Person (Push To Show)
1.2. PTW: Person-To-Machine (Push To View)

1.1 Push-To-Show: Person-to-Person application with Presence. In this operation, a contact list on the user device indicates Presence status for other users. Session begins instantly upon confirmation by the contacted user/users whose addresses have been selected from the contact list and/or manually edited. The contact list facilitates the user to immediately see who, within the list, is available to participate to the Push-To-Show session. Upon the session establishment, media streaming, captured by a camera embedded or connected to the terminal device, is activated at the push of a button (i.e., the PTW button). From an end-user perspective, a user accepting an invitation, enters a real time PTW session with the initiator and other users (if any) that were invited to the same session. During the session, participating users converse by pressing and holding the PTW button on their device. Each time the user will press the PTW button, it sends to the other users video stream (e.g., MPEG4, H.263, H264, ...) containing both audio and video data.

This service can be considered to be 'video chat' in which each user is allowed to send an audio/video stream while it is being captured by their camera. The or each other user receives the video stream with an indication of the sender's identity.

1.2. Push-To-View: Person-to-Machine application. In this case, instead of the contact list, the user can be facilitated by a list of servers providing the Push To View service. Obviously, as alternative option, the server's address can be also manually edited by the user. The user can select one of these servers, and receive the data that came from a remotely displaced video camera or video surveillance equipment. The video/audio information is received while holding the button.

2. PTW feature during a Voice Call. During a voice call the user can activate the PTW feature. Upon activation, the user is enabled to send video only data to the other user. To do that, the user presses the PTW button. This enhances a normal voice-call by the addition of accompanying video medium.

The description of some preferred embodiments, which is given by way of example only, will facilitate to give insights about the actual working of this service family.

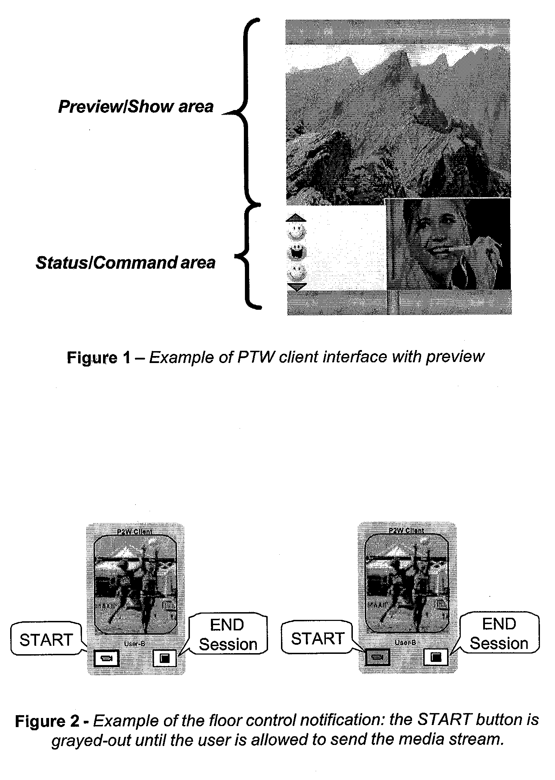

The figure 1 illustrates a possible implementation of the PTW client interface implemented on a mobile telephone handset, and provides the functionality required for operating in a user-to-user chat mode (Push to Show).

The client interface is divided in two logical parts. The first one (*preview*/*show*) will show images, the second one *(status*/*commands)* will show status information, the list of the users who are part of the session and commands to handle the session.
When the client is receiving media from a particular user, the video will be shown in the *preview*/*show* part, while a graphical indication in the *status*/*commands* part will signal which user is sending the media.
A graphical indication in the *status*/*command* part will signal the user when he is allowed to send a media stream. A user may not be allowed to send media streams because the session set up has not completed yet or because another user is sending media and nobody else is thus allowed, according to a Floor Control policy managing the authorization's grant. In the *preview*/*show* part of the client, a preview video will be shown to the user when they are allowed to send media.
The PTW command button will be used to start the audio and / or video capture and activate the related media streaming to the other party (ies). The PTW command button can be included in the *status*/*command* part, e.g. as software button or placed on the device somewhere else as hard button.
Apart from the PTW command button, according to the above, at least two other commands (e.g., software buttons) in the *status*/*command* part will be used to:
1. *invite* other parties to the session
2. leave the session and *quit* the client
An additional command that should be available only to the session initiator and / or a mediator, might be: *expel* one party from the session.

Let User-A want to initiate a Push to Show chat session. User-A selects the called party (User-B) address to initiate the PTW session. User-A is able to select the other party address by editing it, by selecting it from a directory (address book) or by selecting it from a buddy list with Presence information. In case of selection from a buddy list, an icon will show the availability of the other party to accept PTW audio and/or video stream. The latter functionality requires integration with a Presence Service.
An invitation will be sent to User-B with a request to initiate a PTW session. During the session set-up a courtesy message indicates that User-B is being contacted. User-B will receive an indication that User-A wants to establish a PTW session. User-B can either accept or reject the invitation. It may be that the Reject option is not displayed to the User-A and the Accept option only can be communicated. If, for whatever reason, User-B is not able to, or is not willing to establish the session, a message shall indicate the failure status to User-A, and the PTW client will be shut down. If the session set-up is successful, an indication shall signal to both User-A and User-B that they are allowed to get the floor, according to the Floor Control functionality, in order to become the *owner of the control*, which means having the possibility to send audio and / or video media streams. Once the session has been established and in the hypothesis User-A is the *owner of the control* (it will probably be the case, as it normally happen in a traditional voice call: who calls is the one that wants to communicate first):
1. the User-A's camera will be activated,
2. preview video images captured by the camera will be shown on the *preview*/*show* part of the screen of the User-A client.
3. the captured audio/video will be streamed in real time and User-B will receive it on his *preview*/*show* part of the screen.

While receiving an audio and / or video streaming, the user will also receive an indication about the identity of the sender, useful in the "one-to-many" usage. While receiving user will be informed by an explicit indication that they are not allowed to send (see figure 2 for an example). Once the sender has finished the audio and / or video stream and it has been played entirely by the other party client, the latter will show back the indication that he is now allowed to get the floor by sending his audio/video stream.
At any time, it is possible for User-A and / or User-B to invite other parties to the Push to Show session. All the users participating to the session will receive the media stream sent by any other user in the same session. At any time, it shall be possible for any user to leave the session. The session will be automatically closed if less than two users remain active.
In the following description User-A wants to initiate a Push to View session, in which the PTW client receives a video stream from a machine such as a camera rather than from another user. The operation may be as follows.

The client is divided in two logical parts. The first one (*show*) will show images, the second one *(status*/*commands*) will show status information and commands to handle the session.
At least two commands (e.g. software buttons) in the *status*/*command* part will be used to:
1. *receive* the video from the other party
2. leave the session and *quit* the client
The *receive* video command button can be also implemented as an hard button outside the *status*/*command* part.
When the client is receiving media, the video will be shown in the *show* part.
A graphical indication in the status and commands part will signal the user when he is allowed to receive the media stream. A user may not be allowed to receive media streams because the session set up has not completed yet.

Such a session may be set up as follows.
User-A starts the Push to View client and selects the called party address (User-B). User-A presses a button to start receiving the audio and / or video streaming and during the session set-up a courtesy message indicates that User-B is being contacted. If, for whatever reason, User-B is not able to send the media stream, a message shall indicate the failure reason to User-A. If the session set-up is successful User-A begins to receive the media stream. When User-A wants to end the media streaming, he will leave the session and quit the client.

The third main mode of operation (video streaming during a call) can enhance users' experience of a normal voice call. Instead of having a proper video call, a user (User-A) may wish to send just a short video to the user (User-B) with whom he is already engaged in a voice call. In this case, the PTW service will preferably automatically select User-B's address in order to initiate the session.

An invitation will be sent to User-B with a request to initiate a PTW session. During the session set-up a courtesy message indicates that User-B is being contacted. User-B will receive an indication that User-A wants to establish a PTW session. User-B can either accept or reject the invitation. It may be that the Reject option is not displayed: only the Accept option can be sent to User-A. If, for whatever reason, User-B is not able to, or is not willing to establish the session, a message shall indicate the failure reason to User-A, and the PTW client will be shut down. If the session set-up is successful, an indication shall signal that they are allowed to get the floor, according to the Floor Control functionality, in order to become the *owner of the control,* which means having the possibility to send video streams. Once the session has been established and in the hypothesis User-A is the *owner of the control* (it will probably be the case, as it normally happen in a traditional voice call: who calls is the one that wants to communicate first):
1. the User-A's camera will be activated,
2. preview video images captured by the camera will be shown on the *preview*/*show* part of the screen of the User-A client,
3. the captured video will be streamed in real time and User-B will receive it on his *preview*/*show* part of the screen.

While receiving a video stream, the user will also receive the indication that he is not allowed to send. Once the sender has finished capturing the video stream and it has been entirely played by the other party client, the latter will show back the indication that he is now allowed to get the floor, thus starting the video capture and sending it to the other party.

It shall be possible for both users to end the PTW session. If the voice call ends, the PTW session shall end as well.

It will be understood therefore that this invention provides a considerable enrichment to the services offered in mobile telecommunication and other networks in a bandwidth-efficient manner, which is simple to use and effective for users.

## Claims

1. A method of providing video streaming in a mobile communication network between two items of equipment connected to the network, at least one of which is a user terminal, the method comprising setting up a packet switched communication channel between said items of equipment and enabling one of said items of equipment to stream video to the other as required from time to time, video streaming being enabled in only one direction at any one time.

2. A method as claimed in claim 1 wherein said items of equipment are a video server and a user terminal and said method comprises displaying at said user terminal an indication of video available at said server and streaming selected video from said server to said user terminal in response to a selection signal from said user terminal.

3. A method as claimed in claim 1 wherein said two items of equipment are two user terminals and said method further comprises providing an indication at one of said user terminals of the availability of the other to receive a video stream communication.

4. A method as claimed in claim 3 wherein said one user terminal is provided with a video camera and said method comprises generating said video stream from the output of said camera.

5. A method according to any preceding claim comprising using Session Initiation Protocol (SIP) to set up said communication channel.

6. A method according to any preceding claim in which said packet switched channel is a TCP/IP channel.

7. A mobile communication device for use in a mobile communication network comprising means arranged to indicate to one or more other devices willingness to receive a uni-directional video stream communication therefrom, to receive such indications from other devices, to display an indication of any other such device from which such an indication has been received, and to send a video stream to one or more other such devices after selection of the same by a user.

8. A device according to claim 7 further comprising a video camera and means to generate said video stream from the output of said camera.

9. A mobile communications network arranged to enable a plurality of devices according to claim 7 or 8 to communicate with each other, the network comprising means responsive to requests from said devices to send video streams to one or more other devices to set up packet switched communication between said devices.

10. A network according to claim 9 in which said packet switched communication is set up using Session Initiation Protocol (SIP).
